# EUROPÄISCHE PATENTSCHRIFT

(11) **EP 4 042 527 B1**
(45) Veröffentlichungstag und Bekanntmachung des Hinweises auf die Patenterteilung: **28.01.2026**
(21) Anmeldenummer: 20789869.3
(22) Anmeldetag: 01.10.2020
(51) Int. Cl.: F21V 21/35, F21V 23/06, H01R 25/16, H01R 31/06, H02G 3/04, H02G 3/32

(54) **LEUCHTEN-TRAGSCHIENE SOWIE TRAGSCHIENENSYSTEM MIT TRAGSCHIENE**
LIGHT CARRIER RAIL, AND CARRIER RAIL SYSTEM HAVING CARRIER RAILS
RAIL PORTEUR DE LUMINAIRE ET SYSTÈME DE RAILS PORTEURS POURVU DE RAILS PORTEURS

(30) Priorität: 08.10.2019 DE 102019126915
(43) Veröffentlichungstag der Anmeldung: 17.08.2022
(73) Patentinhaber: Zumtobel Lighting GmbH, 6850 Dornbirn (AT)
(72) Erfinder: LADSTÄTTER, Gerald, 6833 Klaus (AT); MACHATE, Andreas, 88239 Wangen im Allgäu (DE)
(74) Vertreter: Kiwit, Benedikt
(86) Internationale Anmeldenummer: PCT/EP2020/077509
(87) Internationale Veröffentlichungsnummer: WO 2021/069300

(56) Entgegenhaltungen:
- EP-A1- 2 287 978
- CN-U- 204 885 742
- FR-A- 1 551 204
- JP-A- 2009 100 039
- JP-A- 2016 015 809
- US-A1- 2014 112 001
- US-A1- 2019 296 507

## Beschreibung

Die vorliegende Erfindung betrifft eine Leuchten-Tragschiene für ein Tragschienensystem mit einem länglichen Tragprofil sowie einer Stromschiene mit wenigstens einem elektrischen Leiter, welche sich längs des Tragprofils erstreckt. Ferner betrifft die Erfindung auch ein Tragschienensystem, welches mehrere solcher Tragschienen aufweist.

Aus dem Stand der Technik sind Tragschienen der eingangs genannten Art grundsätzlich bekannt. Diese dienen in der Regel der Aufnahme und Versorgung von elektrischen und elektronischen Komponenten, wie beispielsweise Leuchten und Lichtbandkomponenten. Auch können in entsprechende Tragschienen bzw. Tragprofile weitere elektrische oder elektronische Komponenten aufgenommen werden, wie beispielsweise Lautsprecher oder Sensoren und dergleichen. Das Internet der Dinge (Internet of Things; loT) bringt zunehmend neue Nutzungsmöglichkeiten für eine Vielzahl zusätzlicher Elemente mit sich, wie beispielsweise die Nutzung von Funkbaken (Beacon), Sensoren aller Art und so weiter.

CN 204 885 742 U offenbart eine Stromversorgungseinrichtung, welche eine Sammelschiene mit einem Rohrkörper und einer darin verlaufenden Stromleitung sowie einen auf die Sammelschiene aufsetzbaren Stecker aufweist. Der Stecker weist Anschlüsse auf, mittels denen externe Geräte an die Stromleitung in der Sammelschiene angeschlossen werden können.

JP 2009 100039 A offenbart ein Stromleitungsverbindungssystem mit einem Stromleitungsschacht, in dessen Inneren eine Stromleitung verläuft. Das Stromleitungsverbindungssystem weist ferner einen von dem Stromleitungsschacht abnehmbaren Adapterstecker auf, mittels dem ein Endgerät über eine Steckverbindung an die Stromleitung angeschlossen werden kann.

US 2014 /112001 A1 offenbart eine Beleuchtungsvorrichtung, die eine Schieneneinheit und eine elektrische Einheit umfasst, die so auf der Schieneneinheit installiert ist, dass sie in ihrer Position verstellbar ist. Die elektrische Einheit steht mit der Schieneneinheit in Kontakt und wird von der Schieneneinheit mit Strom versorgt. In der Beleuchtungsvorrichtung können mehrere elektrische Einheiten so auf einer Schieneneinheit installiert sein, dass ihre Position verstellbar ist, und selbst wenn die Position jeder elektrischen Einheit geändert wird, kann die elektrische Einheit zuverlässig mit Strom von der Schieneneinheit versorgt werden.

Die zunehmende Verwendung von elektrischen oder elektronischen Komponenten an derartigen Tragschienen sorgt dafür, dass diese Tragschienen mit entsprechenden Komponenten stark beladen sind, so dass diese sich oft im Wege stehen bzw. es zu einer funktionalen Kollision kommen kann. Eine häufige Funktion derartiger Tragschienen, nämlich die Aufnahme von Leuchten zur Lichtabgabe, wird zudem zunehmend durch die Nutzung von weiteren elektrischen und elektronischen Komponenten, wie loT-Komponenten, beschränkt, welche sich oft räumlich in den Lichtabgabebereich erstrecken. Des Weiteren nutzen entsprechende elektrische oder elektronische Komponenten unterschiedliche Schnittstellen, so dass eine entsprechende Vorrichtung je nach zu verwendenden Komponenten individuell konfiguriert werden muss. Die Bereitstellung von Anschlussmöglichkeiten für solche Komponenten ist somit nicht nur verkompliziert, sondern auch mit einem hohen Kostenaufwand verbunden. Das Anbringen von entsprechenden Schnittstellen ist bei den heute bekannten Tragschienensystemen stets mit einem großen Aufwand verbunden.

Dennoch ist die Nutzung elektrischer oder elektronischer Komponenten insbesondere in Kombination mit Tragschienen von großer Bedeutung. So ist beispielsweise ein Großteil der bekannten loT-Komponenten bereits mit drahtloser Datenübertragung ausgestattet und findet daher zunehmend Anwendungsgebiete. Eine Versorgung dieser und anderer elektrischer und elektronischer Komponenten erfolgt jedoch weiterhin bevorzugt mittels Kabel oder alternativ mittels Akkumulatoren.

Es ist somit eine Aufgabe der vorliegenden Erfindung, eine Leuchten-Tragschiene sowie ein mehrere Tragschienen aufweisendes Tragschienensystem bereitzustellen, welche in einfacher Weise Anschlussmöglichkeiten für elektrische oder elektronische Bauteile bereitstellen.

Diese Aufgabe wird durch den Gegenstand des unabhängigen Anspruchs gelöst. Die abhängigen Ansprüche bilden den zentralen Gedanken der vorliegenden Erfindung in besonders vorteilhafter Weise weiter.

Gemäß einem ersten Aspekt betrifft die vorliegende Erfindung daher eine Leuchten-Tragschiene (im Folgenden auch bezeichnet als: eine Tragschiene) für ein Tragschienensystem. Die Tragschiene weist ein längliches Tragprofil auf. Ferner weist die Tragschiene eine Stromschiene mit wenigstens einem elektrischen Leiter zum elektrischen Anschluss von elektrischen oder elektronischen Komponenten auf. Die Stromschiene erstreckt sich längs des Tragprofils. Die Tragschiene weist ferner ein Adapterelement auf. Das Adapterelement wiederum weist wenigstens einen ersten Anschluss und wenigstens ein Verbindungselement sowie ein Adaptergehäuse zum Tragen des ersten Anschlusses und/oder des Verbindungselements auf. Das Adaptergehäuse kann also bevorzugt wenigstens den ersten Anschluss und/oder das Verbindungselement aufweisen. Der erste Anschluss ist über das Verbindungselement elektrisch und/oder signaltechnisch mit der Stromschiene koppelbar. Der erste Anschluss ist zum Anschließen eines korrespondierenden zweiten Anschlusses eines elektrischen oder elektronischen Bauteils ausgebildet, um so das elektrische oder elektronische Bauteil über das Verbindungselement mit der Stromschiene elektrisch und/oder signaltechnisch zu koppeln.

Mittels dieses Adapters wird es somit ermöglicht, ein Bauteil einfach über entsprechende Schnittstellen bereitzustellen. Durch das Verbindungselement lässt sich so ein entsprechendes mit Stromschiene bestücktes Tragprofil um ein solches Bauteil nachrüsten. Die einfache Nutzung der über die Stromschiene bereits zur Verfügung gestellten Spannung (bevorzugt eine Niedervoltspannung) mittels des Verbindungselements erhöht die praktische Anwendung einer erfindungsgemäßen Tragschiene. Somit ist es mittels des Adapterelements möglich, verschiedene (bspw. standardisierte) Schnittstellen jederzeit und unabhängig von weiteren elektrischen oder elektronischen Komponenten, beispielsweise von Leuchten und somit auch unabhängig von einer Lichtebene der Vorrichtung, an die Tragschiene anzuschließen. Auf diese Weise kann mit geringerem Aufwand eine Bereitstellung, ein einfacher Anschluss sowie die Versorgung beliebiger zusätzlicher elektrischer oder elektronischer Bauteile gewährleistet werden.

Bei dem ersten Anschluss kann es sich bevorzugt um einen Teil einer Standardschnittstelle, wie HDMI, USB, Hohlsteckerverbindung, Netzwerksteckerverbindung beispielsweise für LAN-Kabel für Power over Ethernet (PoE), bilden. Insbesondere bildet der erste Anschluss eine standardisierte Anschlussbuchse einer entsprechenden Standardschnittstelle. Auf diese Weise können alle möglichen und insbesondere intelligenten Bauteile in besonders einfacher Weise entsprechend elektrisch und/oder datentechnisch über die Stromschiene versorgt werden.

Das Adapterelement kann mehrere erste Anschlüsse aufweisen. Diese können gleich oder unterschiedlich ausgebildet sein. Insofern können auch mehrere elektrische oder elektronische Bauteile direkt angeschlossen werden. Bei Bereitstellung unterschiedlicher erster Anschlüsse ist es zudem möglich, unterschiedliche Schnittstellen zu nutzen und somit auch Geräte mit unterschiedlichen Schnittstellen entsprechend einfach anzuschließen.

Jeweils einer, mehrere oder alle der (mehreren) ersten Anschlüsse kann/können über eines oder mehrere Verbindungselemente elektrisch und/oder signaltechnisch mit der Stromschiene koppelbar sein. Der Adapter kann also nach den gegebenen Anforderungen spezifisch konfiguriert bzw. ausgelegt sein.

Zwischen dem Verbindungselement und dem ersten Anschluss bzw. den ersten Anschlüssen kann eine Leiterplatte für eine Transformation der Spannungs- und/oder Stromwerte der Stromschiene beispielsweise auf die des ersten Anschlusses bzw. der ersten Anschlüsse oder der damit zu verbindenden Bauteile vorgesehen sein. Die Leiterplatte kann auch für eine Transformation von dem ersten Anschluss, wie einem Ethernet-Eingang, zu einem dritten Anschluss, wie einem Ethernet-Ausgang, ausgebildet sein. Das Adaptergehäuse weist besonders bevorzugt ebenso diesen dritten Anschluss auf. Folglich kann in einfacher Weise eine entsprechende Transformation der Spannung- und/oder Stromwerte erfolgen, wie sie für die entsprechenden Anschlüsse erforderlich sind. Auch kann Power over Ethernet (PoE) einfach genutzt werden.

Das Adaptergehäuse kann den ersten Anschluss und/oder den dritten Anschluss aufweisen und vorzugsweise mit diesem oder diesen integral ausgebildet sein. Somit kann das Handling des Adapters weiter verbessert und dieser zudem optisch ansprechend gestaltet werden.

Das Tragprofil kann wenigstens eine Durchgangsöffnung aufweisen. Zur elektrischen und/oder signaltechnischen Kopplung mit der Stromschiene kann das Verbindungselement dann wenigstens teilweise durch die Durchgangsöffnung geführt werden/sein. Auf diese Weise können definierte Anschlusspositionen bereitgestellt werden. Zudem ist ein Anschluss des Verbindungselements mit der Stromschiene in besonders einfacher Weise möglich.

Das Verbindungselement kann zur elektrischen und/oder signaltechnischen Kopplung bevorzugt lösbar mit der Stromschiene (direkt) verbindbar/verbunden sein. Auf diese Weise kann das Adapterelement in beliebiger Weise positioniert und gegebenenfalls entsprechend nachgerüstet werden. Auch ist ein Austausch oder eine Wartung entsprechender Adapterelemente in einfacher Weise möglich.

Das Verbindungselement kann direkt an oder mit dem Adaptergehäuse (integral) ausgebildet sein, in dem es beispielsweise als Teil des Adaptergehäuses mit entsprechenden Anschlussbereichen vorragt. Auch kann das Verbindungselement lösbar mit dem Adaptergehäuse verbunden sein, so dass ein Austausch bzw. eine Konfiguration mit beliebigen Verbindungselementen erleichtert ist.

Gemäß der Erfindung ist das Verbindungselement über Kabel mit dem ersten Anschluss elektrisch und/oder signaltechnisch verbunden. Ein derart ausgebildetes Verbindungselement kann beispielsweise als mittels Kabel angeschlossener Verbindungsstecker ausgebildet sein. Somit ist das Verbindungselement bzw. seiner Anschlussposition flexibler.

Das Verbindungselement kann mit dem ersten Anschluss als eine Einheit ausgebildet sein. Diese Einheit kann, bevorzugt über das Verbindungselement und ferner bevorzugt lösbar, mit dem Adaptergehäuse verbindbar/verbunden sein. Somit kann das Adaptergehäuse mit einer entsprechend konfigurierten Kombination aus erstem Anschluss und Verbindungselement bestückt werden, so dass das Adaptergehäuse in einfacher Weise individuell mit einer hinsichtlich der Anschlussposition flexiblen Einheit ausgestattet werden kann.

Je nach Einsatzgebiet kann das Verbindungselement also auf unterschiedliche Weise ausgebildet bzw. bereitgestellt sein. Eine integrale Ausbildung mit dem Adaptergehäuse sorgt für eine einfachere Verbindung des Adapters mit der Stromschiene. Eine Kabel-Lösung ermöglicht eine flexiblere Handhabung und flexiblere Anschlussmöglichkeiten des Verbindungselements mit der Stromschiene.

Das Tragprofil kann einen Innenraum zur wenigstens teilweisen Aufnahme von elektrischen oder elektronischen Komponenten begrenzen. Somit können diese Komponenten in sicherer Weise aufgenommen und bevorzugt auch über die Stromschiene angeschlossen werden. Hierzu vorgesehene elektrische Kontaktbereiche können bevorzugt durch das Tragprofil einerseits und eine (funktionale) Vorderseite der elektrischen oder elektronischen Komponenten andererseits begrenzt und somit berührsicher angeordnet werden.

Das Tragprofil kann des Weiteren eine Haltestruktur zur mechanischen Befestigung der Tragschiene aufweisen. Somit kann das Tragprofil in einfacher Weise, beispielsweise durch direkte Montage oder mittels eines zusätzlichen Bauteils, wie einer Haltefeder, an einer Montagefläche montiert werden.

Die Stromschiene kann in oder an dem Tragprofil aufgenommen sein. Vorzugsweise ist die Stromschiene in dem Innenraum des Tragprofils vorgesehen, so dass durch Einsetzen entsprechender elektrischer oder elektronischer Komponenten in einfacher Weise eine entsprechende elektrische und/oder signaltechnische Kontaktierung möglich ist.

Das Tragprofil kann eine offene Längsseite aufweisen, über die die Stromschiene zugänglich und bevorzugt die elektrischen oder elektronischen Komponenten elektrisch mit der Stromschiene und weiter bevorzugt mechanisch mit dem Tragprofil gekoppelt werden können. Dies ermöglicht eine besonders einfache Kopplung der benannten elektrischen oder elektronischen Komponenten sowohl elektrisch über die Stromschiene als auch mechanisch über das Tragprofil.

Die Tragschiene kann ferner ein elektrisches oder elektronisches Bauteil aufweisen. Dieses weist wiederum einen zweiten Anschluss zur Verbindung mit dem korrespondierenden ersten Anschluss des Adapterelements zur elektrischen und/oder signaltechnischen Kopplung mit der Stromschiene. Das elektrische oder elektronische Bauteil kann bevorzugt eine Leuchte, insbesondere eine Spot-Leuchte oder eine Schwanenhalsleuchte, ein Sensor, insbesondere ein Bewegungssensor oder ein Helligkeitssensor, eine Funkbake (Beacon), ein WLAN-Repeater, ein Lautsprecher, eine Kamera, ein Ventilator und/oder ein Feuermelder sein. Die Erfindung ist hier selbstverständlich auf kein bestimmtes elektrisches oder elektronisches Bauteil begrenzt, solange dieses mittels eines entsprechenden zweiten Anschlusses ausgestattet ist, mit dem dieses Bauteil sich mit dem ersten Anschluss koppeln lässt. Die Einsatzmöglichkeiten der erfindungsgemäßen Tragschiene sind somit vielfältig, was die Flexibilität der Tragschiene deutlich erhöht. Dieses gepaart mit einem einfachen Anschluss entsprechender Komponenten macht diese Tragschiene besonders benutzerfreundlich.

Das elektrische oder elektronische Bauteil kann einen Koppelbereich zur mechanischen Kopplung mit dem Tragprofil und/oder der Stromschiene und/oder dem Adapterelement und vorzugsweise dessen Adaptergehäuse aufweisen. Durch Bereitstellung eines entsprechenden Koppelbereichs kann das Vorsehen der entsprechenden Bauteile weiter verbessert werden. Diese können somit, sofern erforderlich, definiert positioniert und es müssen keine separaten Halteelemente bereitgestellt werden.

Die Tragschiene kann ferner eine Verbindungsachse aufweisen, um das elektrische oder elektronische Bauteil mit dem Tragprofil und/oder der Stromschiene und/oder dem Adapterelement, vorzugsweise dem Adaptergehäuse, mechanisch und bevorzugt drehbar zu koppeln. Der Koppelbereich kann bevorzugt mit der Verbindungsachse verbindbar sein oder diese selbst aufweisen. Durch Bereitstellung einer entsprechenden Verbindungsachse können die Freiheitsgrade eines entsprechenden elektrischen oder elektronischen Bauteils weiter erhöht werden, sofern dies erforderlich ist. Dies kann beispielsweise bei der Nutzung von Leuchten, insbesondere Spot-Leuchten, Kameras und anderen Bauteilen, welche bevorzugt eine definierte Ausrichtung erfordern, welche zudem bevorzugt änderbar bereitgestellt sein soll, von erheblichen Vorteil sein.

Das Adapterelement und vorzugsweise dessen Adaptergehäuse kann mit dem Tragprofil und/oder der Stromschiene mechanisch koppelbar/gekoppelt sein. Insofern ist es möglich, auch das Adapterelement definiert zu positionieren und bevorzugt lagepositioniert vorzusehen. Dies soll es auch ermöglichen, eine definierte Position beizubehalten, wenn beispielsweise die Anschlüsse genutzt werden; also z.B. entsprechende Stecker als zweite Anschlüsse in entsprechende Anschlussbuchsen als erste Anschlüsse gesteckt oder aus diesen entnommen werden.

Das Adaptergehäuse kann bevorzugt eine Koppelstruktur aufweisen, welche mit einer korrespondierenden Koppelstruktur des Tragprofils und/oder der Stromschiene, vorzugsweise der Haltestruktur des Tragprofils, mechanisch koppelbar bzw. gekoppelt und vorzugsweise in Längsrichtung der Tragschiene verschiebbar mechanisch koppelbar bzw. gekoppelt ist. Folglich ist es möglich, vorhandene Haltestrukturen des Tragprofils zu nutzen, um das Adaptergehäuse sicher an dem Tragprofil vorzusehen. Auf diese Weise können auch zusätzliche Verbindungselemente eingespart werden.

Das Adaptergehäuse kann eine U-Form oder eine C-Form aufweisen, um das Tragprofil wenigstens teilweise zu umgreifen, in dem bevorzugt nämlich die beiden Seitenschenkel der U-Form bzw. C-Form seitlich an dem Tragprofil anliegen. Der die Seitenschenkel verbindende Verbindungsschenkel kann dann beispielsweise die Rückseite des Tragprofils, welche beispielsweise einer Lichtabgabeseite der Tragschiene gegenüberliegt, umgreifen. Das Umgreifen findet insbesondere bevorzugt statt, wenn das Adapterelement mit dem Tragprofil mechanisch gekoppelt ist. Auf diese Weise ist es möglich, eine sichere und effektive Verbindung zwischen Tragprofil und Adapterelement bereitzustellen, ohne einen Funktionsbereich der Tragschiene, beispielsweise einen Lichtabgabebereich, zu behindern.

Das Adaptergehäuse kann ferner eine Führungsschiene aufweisen, welche mit dem elektrischen oder elektronischen Bauteil mechanisch koppelbar/gekoppelt ist, um das elektrische oder elektronische Bauteil entlang der Führungsschiene verschiebbar zu halten. Die mechanische Kopplung geschieht dabei bevorzugt über den Koppelbereich oder die Verbindungsachse. Auf diese Weise können die Freiheitsgrade der elektrischen oder elektronischen Bauteile weiter erhöht werden, indem diese nämlich entlang des Adaptergehäuses verfahrbar und somit an definierte Position verschiebbar sind.

Die Tragschiene kann ferner wenigstens eine elektrische oder elektronische Komponente aufweisen, welche mit der Stromschiene, vorzugsweise deren elektrischen Leitern, elektrisch und bevorzugt beispielsweise mit dem Tragprofil mechanisch gekoppelt/koppelbar ist. Bei der elektrischen oder elektronischen Komponente kann es sich bevorzugt um eine Leuchte, insbesondere eine Lichtbandleuchte oder eine Spot-Leuchte, ein Betriebsgerät und/oder einen Sensor, insbesondere einen Bewegungssensor oder einen Helligkeitssensor, handeln. Grundsätzlich ist die Erfindung nicht auf eine bestimmte elektrische oder elektronische Komponente beschränkt, sofern diese entsprechend mit der Tragschiene bzw. deren Tragprofil/Stromschiene koppelbar ist, um entsprechend funktional über diese bereitgestellt zu werden.

Die Tragschiene kann ferner ein Kabelführungselement aufweisen, welches wenigstens einen Aufnahmeabschnitt zum seitlichen Einführen quer zu einer Längserstreckung eines Kabels und Halten des Kabels aufweist. Das Kabelführungselement kann des Weiteren eine Verbindungsstruktur zur mechanischen Verbindung des Kabelführungselements mit einer korrespondierenden Verbindungsstruktur, vorzugsweise der Haltestruktur, des Tragprofils aufweisen, oder beispielsweise auch mit einer anderen korrespondierenden Verbindungsstruktur beispielsweise des Adapterelements. Mittels des Kabelführungselements wird ein sicheres Halten/Führen und optisch ansprechendes Verstauen von Kabeln ermöglicht.

Gemäß einem weiteren Aspekt betrifft die vorliegende Erfindung ferner ein Tragschienensystem zum Anschluss elektrischer oder elektronischer Komponenten, welches mehrere Tragschienen aufweist, wobei wenigstens eine der Tragschienen eine Tragschiene gemäß der vorliegenden Erfindung ist. Die Tragschienen sind bevorzugt zueinander längs in Reihe angeordnet. Die Stromschienen benachbarter Tragschienen, vorzugsweise deren elektrische Leiter, sind bevorzugt elektrisch miteinander gekoppelt. Somit ist es möglich, unter Verwendung mehrerer Tragprofile ein Tragschienensystem zu bilden, wobei das Tragschienensystem aus erfindungsgemäßen Tragschienen bestehen kann oder diese wenigstens in ein entsprechendes Tragschienensystem integriert sein können.

Das Tragschienensystem kann ferner einen ersten Verbinder zum elektrischen und bevorzugt auch mechanischen Koppeln der Stromschienen aufweisen. Das Tragschienensystem kann ebenso einen zweiten Verbinder zum mechanischen Koppeln der Tragprofile, bevorzugt durch korrespondierende Koppelstrukturbereiche, aufweisen. Das Tragschienensystem kann des Weiteren bevorzugt ein Verbindungsteil, wie eine Verbindungsschiene, aufweisen, welches bevorzugt wenigstens einen Teil des ersten Verbinders und/oder des zweiten Verbinders aufweist. Insofern können bevorzugt besonders einfache Verbindungselemente zur elektrischen und/oder mechanischen Kopplung mehrerer Tragschienen bereitgestellt werden.

Weitere Merkmale und Vorteile der vorliegenden Erfindung werden anhand der Figuren der begleitenden Zeichnungen beschrieben. Es zeigen:
- Figur 1: eine perspektivische Teilansicht einer erfindungsgemäßen Tragschiene gemäß einem ersten Ausführungsbeispiel der vorliegenden Erfindung,
- Figur 2: eine perspektivische Teilansicht einer erfindungsgemäßen Tragschiene gemäß einem zweiten Ausführungsbeispiel der vorliegenden Erfindung,
- Figur 3: eine perspektivische Ansicht eines erfindungsgemäßen Adapterelements mit elektrischem/elektronischem Bauteil (Spot-Leuchte) gemäß einem Ausführungsbeispiel der vorliegenden Erfindung,
- Figur 4: eine perspektivische Ansicht der in Figur 3 gezeigten Elemente in zerlegtem Zustand,
- Figur 5: eine perspektivische Teilansicht einer erfindungsgemäßen Tragschiene gemäß einem dritten Ausführungsbeispiel der vorliegenden Erfindung mit angeschlossenem elektrischen/elektronischen Bauteil (Spot-Leuchte),
- Figur 6: eine weitere perspektivische Teilansicht der Tragschiene gemäß Figur 5,
- Figur 7: eine perspektivische Teilansicht eines Tragprofils für eine erfindungsgemäße Tragschiene mit einem Kabelführungselement,
- Figur 8: eine weitere perspektivische Teilansicht des Tragprofils gemäß Figur 7,
- Figur 9: eine weitere perspektivische Teilansicht des Tragprofils gemäß Figur 7, mit elektrischer/elektronischer Komponente (Sensor, Kamera), und
- Figur 10: eine perspektivische Teilschnittansicht einer erfindungsgemäßen Tragschiene gemäß einem vierten Ausführungsbeispiel der vorliegenden Erfindung

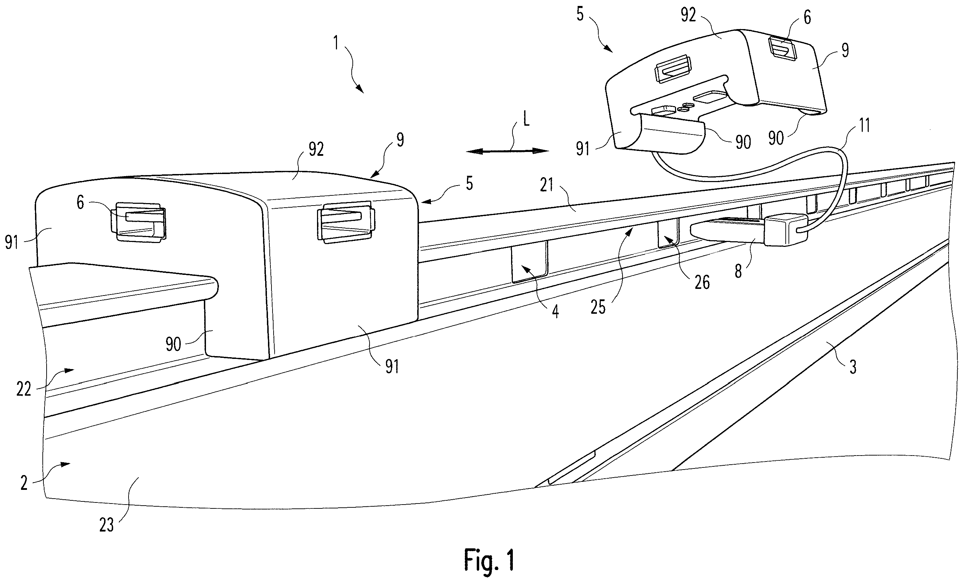

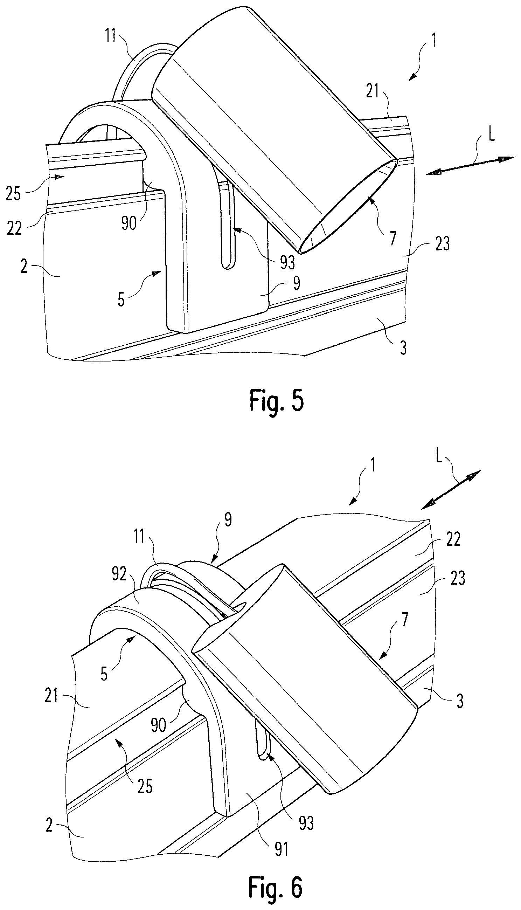

Insbesondere die Figuren 1 bis 6 zeigen unterschiedliche Ausführungsformen einer erfindungsgemäßen Tragschiene 1 für ein Tragschienensystem. Die Tragschiene 1 weist ein längliches Tragprofil 2 auf. Das Tragprofil 2 kann einen Innenraum 20 zur wenigstens teilweisen Aufnahme von elektrischen oder elektronischen Komponenten 3 begrenzen. Wie hier dargestellt, kann das Tragprofil 2 beispielsweise einen im Wesentlichen U-förmigen Querschnitt aufweisen. Dieser ergibt sich durch ein hier rückseitiges Verbindungselement 22 sowie zwei sich davon weg erstreckende und hier parallele Seitenschenkel 23. Die Seitenschenkel 23 begrenzen dabei an ihrem dem Verbindungselement 22 abgewandten Ende eine Durchgangsöffnung bzw. offene Längsseite 24, über die die elektrischen oder elektronischen Komponenten 3 wenigstens teilweise eingesetzt werden können.

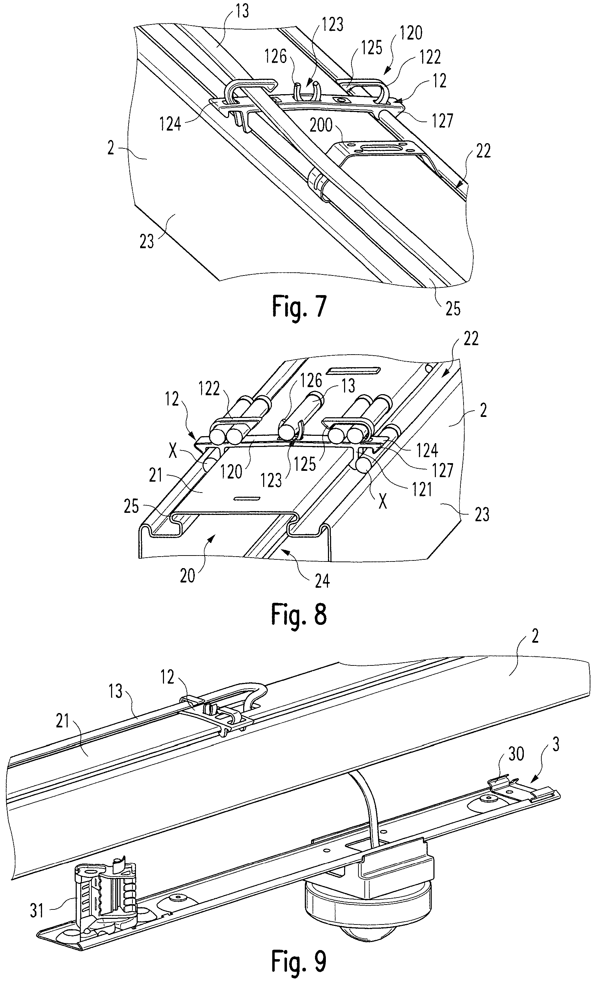

Das Tragprofil 2 kann ferner eine Haltestruktur 21 zur mechanischen Befestigung der Tragschiene 1 aufweisen. Die Haltestruktur 21 erstreckt sich in dem hier dargestellten Ausführungsbeispiel rückseitig des Verbindungselements nach außen weg, sodass die (Leuchten-)Tragschiene 1 an einer bezüglich der die elektrischen oder elektronischen Komponenten 3 aufnehmenden Durchgangsöffnung 24 abgewandten Seite des Tragprofils 2 und somit außerhalb beispielsweise eines Lichtabgabebereichs befestigbar ist. Die Haltestruktur 21 weist hier eine im Wesentlichen T-förmige Querschnittsform auf, wobei selbstverständlich auch andere Formen denkbar sind. Das Tragprofil 2 kann somit in einfacher Weise beispielsweise durch direkte Montage oder mittels eines zusätzlichen Bauteils, wie einer Haltefeder 200 (vgl. Fig. 7), an einer Montagefläche, wie einer Wand oder einer Decke, montiert werden. Die Haltestruktur 21 ist vorliegend hohl ausgebildet und begrenzt somit einen Teil des Innenraumes 20 mit.

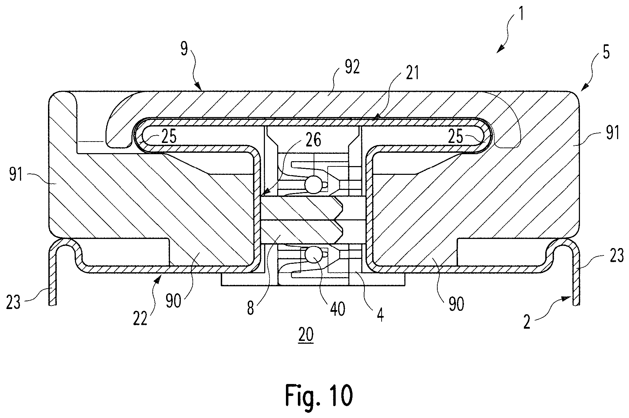

Die Tragschiene 1 weist des Weiteren wenigstens eine Stromschiene 4 mit wenigstens einem elektrischen Leiter 40 zum elektrischen Anschluss von (den) elektrischen oder elektronischen Komponenten 3. Die Stromschiene 4 erstreckt sich dabei längs des Tragprofils 2. Bevorzugt ist die Stromschiene in oder an dem Tragprofil 2 aufgenommen und besonders bevorzugt in dem Innenraum 20 des Tragprofils 2. In dem Ausführungsbeispiel der Figur 10 ist die Stromschiene 4 hier in der Haltestruktur 21, also in dem von der Haltestruktur 21 begrenzten Teil des Innenraums 20, vorgesehen. Auch kann die Stromschiene 4 an einer anderen Position bevorzugt in dem Innenraum 20, beispielsweise an einer oder beiden Seitenschenkeln 23 und/oder dem Verbindungselement 22, vorgesehen sein. Ebenso können mehrere Stromschienen 4 vorgesehen sein. Durch entsprechendes Vorsehen der Stromschiene(n) 4 können beispielsweise durch teilweises Einsetzten der elektrischen oder elektronischen Komponenten 3 in den Innenraum 20 diese mit (wenigstens einer) der Stromschiene(n) 4 entsprechend elektrisch gekoppelt werden. Über die Durchgangsöffnung 24 können die Komponenten 3 bevorzugt ferner mechanisch mit dem Tragprofil 2 gekoppelt werden. Hierzu kann das Tragprofil 2 bzw. die Seitenschenkel 23 entsprechende (längliche) Strukturbereiche aufweisen.

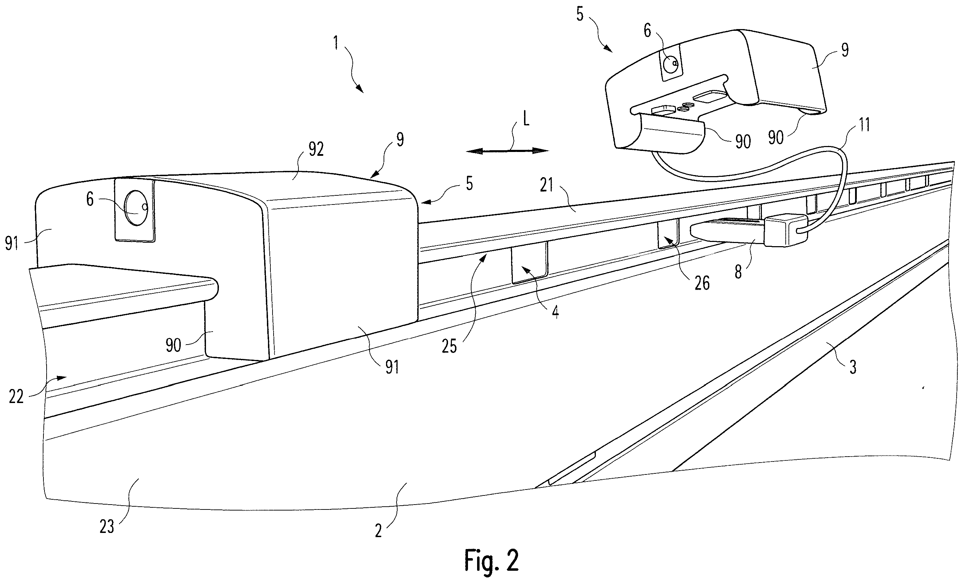

Des Weiteren weist die Tragschiene 1 ein Adapterelement 5 auf. Das Adapterelement 5 wiederum weist einen (vgl. Figuren 2-6) oder auch mehrere (vgl. Figur 1) erste Anschlüsse 6 auf. Der erste Anschluss 6 bildet dabei bevorzugt einen Teil einer Standardschnittstelle, wie HDMI, USB, Hohlsteckerverbindung, Netzwerksteckerverbindung beispielsweise für LAN-Kabel für Power over Ethernet (PoE), und dergleichen. Vorzugsweise bildet der erste Anschluss 6 eine standardisierte Anschlussbuchse einer solchen Standardschnittstelle. So zeigt beispielsweise die Figur 1 hier jeweils zwei USB-Anschlussbuchsen 6. Die Figur 2 zeigt beispielhaft hier je Adapterelement 5 eine Hohlsteckerverbindung. Mithin kann also das Adapterelement 5 mehrere erste Anschlüsse 6 aufweisen, welche gleich oder auch unterschiedlich ausgebildet sind. So können beispielsweise, wie in Figur 1 gezeigt, mehrere USB-Anschlüsse bereitgestellt werden. Auch ist es denkbar, ein Adapterelement 5 bereitzustellen, welches unterschiedliche Arten solcher ersten Anschlüsse 6 bereitstellt; beispielsweise neben USB-Anschlüssen auch Netzwerksteckerverbindungen und beispielsweise auch Klinkenstecker oder auch jegliche andere Form entsprechender erster Anschlüsse 6, bevorzugt standardisierte Anschlüsse, zum Anschließen eines elektrischen oder elektronischen Bauteils 7 mittels eines mit dem ersten Anschluss 6 korrespondierenden zweiten Anschluss 70.

Das Adapterelement 5 weist des Weiteren ein Verbindungselement 8 auf, wobei der erste Anschluss 6 über das Verbindungselement 8 elektrisch und/oder signaltechnisch mit der Stromschiene 4 koppelbar ist, wie dies beispielhaft in Figur 10 gezeigt ist. Wie bereits erwähnt ist der erste Anschluss 6 zum Anschließen eines korrespondieren zweiten Anschlusses 70 eines elektrischen oder elektronischen Bauteils 7 ausgebildet. Auf diese Weise kann das elektrische oder elektronische Bauteil 7 über das Verbindungselement 8 mit der Stromschiene 4 elektrisch und/oder signaltechnisch gekoppelt werden.

Das Adapterelement 5 weist des Weiteren ein Adaptergehäuse 9 zum Tragen des ersten Anschlusses 6 und/oder des Verbindungselements 8 auf. Das Adapterelement 5 und vorzugweise dessen Adaptergehäuse 9 sind bevorzugt mit dem Tragprofil 2 und/oder der Stromschiene 4 mechanisch koppelbar. Hierzu kann das Adaptergehäuse 9 eine Koppelstruktur 90 aufweisen, wie diese beispielsweise in den Figuren 1 bis 6 und 10 zu erkennen ist. Mittels dieser Koppelstruktur 90 kann das Adaptergehäuse 9 mit einer zu der Koppelstruktur 90 korrespondieren Koppelstruktur 25 des Tragprofils 2 und/oder der Stromschiene 4, vorzugweise der Haltestruktur 21 des Tragprofils 2, mechanisch koppelbar sein. Das Adaptergehäuse 9 ist dabei bevorzugt mit dem Tragprofil 2 über die Koppelstrukturen 90, 25 derart mechanisch koppelbar, dass das Adaptergehäuse 9 bevorzugt entlang der Längsrichtung L des länglichen Tragprofils 2 verschiebbar ist. Dabei können Maßnahmen bereitgestellt werden, um das Adaptergehäuse 9 letztlich sicher entlang des Tragprofils 2 lagepositioniert zu tragen; beispielsweise mittels korrespondierender Reibstrukturen oder mittels Klemm- oder Befestigungselementen.

Wie insbesondere den Figuren 1 bis 6 und 10 zu entnehmen ist, kann das Adaptergehäuse 9 eine U-Form oder C-Form aufweisen, um das Tragprofil 2 wenigstens teilweise zu umgreifen. Dies bevorzugt wenigstens dann, wenn das Adapterelement 5 mit dem Tragprofil 2 mechanisch gekoppelt ist, wie dies beispielsweise in den Figuren 1, 2 5, 6 und 10 gezeigt ist. Durch die U-Form bzw. C-Form wird es ermöglicht, dass das Adapterelement 5 bzw. dessen Adaptergehäuse 9 hier bevorzugt mittels der Seitenschenkel 91 seitlich an gegenüberliegenden Seiten des Tragprofils 2, hier an den Seitenschenkeln 23, anliegt, um eine sichere Positionierung und ggf. längsverschiebliche Führung des Adaptergehäuses 9 gegenüber dem Tragprofil 2 zu ermöglichen. Wie in den Figuren 1 und 2 gezeigt ist, kann der hier rückseitige Verbindungsschenkel 92 des Adaptergehäuses 9 den oder die ersten Anschlüsse 6 aufweisen bzw. bereitstellen. Grundsätzlich können diese selbstverständlich auch an anderen Positionen beispielsweise des Adaptergehäuses 9 oder auch separat bereitgestellt werden.

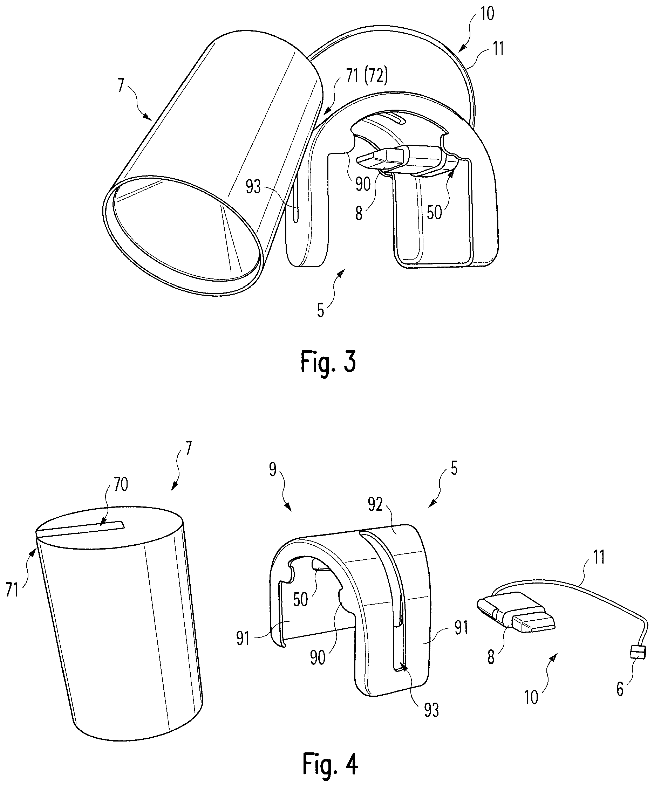

Beispielsweise ist es denkbar, dass, wie in den Figuren 3 und 4 zu erkennen ist, das Verbindungselement 8 mit dem ersten Anschluss 6 als eine Einheit 10 ausgebildet ist. Diese Einheit 10 ist dann bevorzugt über das Verbindungselement 8 und weiter bevorzugt lösbar mit dem Adaptergehäuse 9 verbindbar, wie dies insbesondere der Figur 3 zu entnehmen ist.

Das Verbindungselement 8 ist über Kabel 11 mit dem ersten Anschluss 6 elektrisch und/oder signaltechnisch verbunden. Dies ist beispielsweise den Figuren 1 und 2 zu entnehmen. In dem Ausführungsbeispiel der Figuren 3 bis 6 bildet die Verbindung des Verbindungselements 8 mit dem ersten Anschluss 6 über das Kabel 11 die vorbeschriebene Einheit 10. Das Verbindungselement 8 kann, wie in Figur 10 gezeigt, auch direkt an oder mit dem Adaptergehäuse 9 ausgebildet sein. So kann beispielsweise das Verbindungselement als hier nach innen bezüglich der U-Form bzw. C-Form sich erstreckende Form von dem Adaptergehäuse 9 vorstehen und entsprechende Kontaktierungselemente aufweisen, welche dann eben der elektrischen und/oder signaltechnischen Kopplung mit der Stromschiene 4 dienen. Beispielsweise durch einfaches Aufschnappen des Adaptergehäuses 9 auf das Tragprofil 2 kann somit eine entsprechende Kopplung des Verbindungselements 8 mit der Stromschiene 4 und somit des ersten Anschlusses 6 über das Verbindungselement 8 mit der Stromschiene 4 bereitgestellt werden.

Grundsätzlich ist es auch denkbar, dass das Verbindungselement 8 lösbar mit dem Adaptergehäuse 9 verbunden bzw. verbindbar ist, wie dies beispielsweise aus dem Ausführungsbeispiel der Figuren 3 und 4 zu entnehmen ist. Hier kann das Verbindungselement 8 durch eine Durchgangsöffnung 50 wenigstens teilweise durch das Adaptergehäuse 9 eingeführt und bevorzugt auch mit diesem verbunden werden, um so zur Verbindung mit der Stromschiene 4 bereitgestellt zu werden bzw. in Verbindung mit dieser gebracht zu werden.

Das Verbindungselement 8 kann zur elektrischen und/oder signaltechnischen Kopplung bevorzugt lösbar mit der Stromschiene 4 und weiter bevorzugt direkt mit dieser verbindbar sein. Auf diese Weise lässt sich eine einfache Montage und Demontage bzw. Neukonfiguration einer erfindungsgemäßen Tragschiene 1 in einfacher Weise bewerkstelligen.

Das Tragprofil 2 kann ebenso wenigstens eine Durchgangsöffnung 26 aufweisen. In dem Ausführungsbeispiel der Figuren 1 und 2 sind mehrere solcher Durchgangsöffnungen 26 und diese ferner in regelmäßigen Abständen entlang des Tragprofils 2 in der Haltestruktur 21 vorgesehen. Grundsätzlich können diese Durchgangsöffnungen 26 auch in anderen Bereichen des Tragprofils 2 eingebracht sein. Das Verbindungselement 8 ist zur elektrischen und/oder signaltechnischen Kopplung mit der Stromschiene 4 wenigstens teilweise durch die bzw. eine der Durchgangsöffnung(en) 26 geführt, wie dies in den Figuren 1 und 2 bei dem jeweils hinteren Adapterelement 5 angedeutet sowie in Figur 10 gezeigt ist. Insofern sind die Durchgangsöffnungen 26 bevorzugt derart positioniert und ausgerichtet, dass eben ein entsprechendes Verbindungselement 8, wenn es durch eine solche Durchgangsöffnung 26 hindurchgeführt wird, automatisch in Kopplung mit der Stromschiene 4 gebracht werden kann (vgl. Figur 10).

Zwischen dem Verbindungselement 8 und dem oder den ersten Anschlüssen 6 kann eine Leiterplatte für eine Transformation der Spannungs- und/oder Stromwerte der Stromschiene 4 bevorzugt auf diejenigen des entsprechenden ersten Anschlusses 6 bzw. der damit zu koppelnden Bauteile 7 vorgesehen sein. Die Leiterplatte kann ebenso für eine Transformation von dem ersten Anschluss 6, wie beispielsweise einem Ethernet-Eingang, zu einem dritten Anschluss (nicht gezeigt), wie beispielsweise einem Ethernet-Ausgang, vorgesehen sein. In diesem Fall weist bevorzugt das Adapterelement 5 den dritten Anschluss auf.

Insgesamt bevorzugt kann das Adaptergehäuse 9 den oder die ersten Anschlüsse 6 bzw. den oder die dritten Anschlüsse aufweisen, wie dies beispielhaft in den Figuren 1 und 2 dargestellt ist. Durch die (ggf. lösbar) integrale Bereitstellung der entsprechenden ersten bzw. dritten Anschlüsse können diese sicher positioniert werden. Zudem wird ein stabiles und leichtes Anschließen entsprechender Bauteile 7 an diese Anschlüsse 6 gewährleistet.

Es ist grundsätzlich denkbar, dass jeder der ersten Anschlüsse 6, sofern mehrere vorgesehen sind, über eines oder ggf. mehrere Verbindungselemente 8 elektrisch und/oder signaltechnisch mit der Stromschiene 4 koppelbar ist. Auch ist es denkbar, dass mehrere oder auch alle der mehreren ersten Anschlüsse 6 über eines oder mehrere Verbindungselemente 8 elektrisch und/oder signaltechnisch mit der Stromschiene 4 koppelbar sind. Die Zusammensetzung und Verbindung von ersten Anschlüssen 6 mit entsprechenden Verbindungselementen 8 ist dabei durch die Erfindung nicht beschränkt, sondern kann vielmehr nach gewünschten Kopplungsprofilen beliebig ausgelegt werden. So ist es beispielsweise denkbar, dass unterschiedliche erste Anschlüsse 6 mit unterschiedlichen Bereichen bzw. Leitern 40 der Stromschiene 4 zu koppeln sind, sodass eine entsprechende Aufsplittung in mehrere Verbindungselemente 8 von Vorteil sein kann. Auch ist es denkbar, dass beispielsweise ein bestimmter Anschluss 6 mit mehreren Bereichen bzw. Leitern 40 einer Stromschiene 4 gekoppelt werden soll, um beispielsweise mit unterschiedlichen Datensträngen verbunden zu werden, sodass auch ein einziger erster Anschluss 6 mehrere Verbindungselemente 8 aufweisen kann.

Wie den Figuren 3 bis 6 zu entnehmen ist, kann die Tragschiene 1 ferner ein mit dieser bevorzugt lösbar verbindbares elektrisches oder elektronisches Bauteil 7 aufweisen. Dieses wiederum weist einen zweiten Anschluss 70 zur Verbindung mit dem korrespondieren ersten Anschluss 6 des Adapterelementes 5 zur elektrischen und/oder signaltechnischen Kopplung mit der Stromschiene 4 eben über das Verbindungselement 8 auf. Das elektrische oder elektronische Bauteil 7 kann bevorzugt, wie den Figuren 3 bis 6 zu entnehmen ist, eine Leuchte und hier insbesondere eine Spot-Leuchte sein. Auch ist es denkbar, dass die Leuchte beispielsweise eine Schwanenhalsleuchte ist, welche einen korrespondierenden Teil einer Standardschnittstelle, wie beispielsweise einen USB-Stecker, aufweist, und so direkt mit dem korrespondieren ersten Anschluss 6 verbunden werden kann. Die Bauteile 7 können des Weiteren Sensoren, wie beispielsweise Bewegungssensoren oder Helligkeitssensoren, Funkbaken (Beacon) beispielsweise zur Nutzung für eine Indoor-Navigation, WLAN-Repeater, Lautsprecher, Kameras, Ventilatoren, und/oder Feuermelder oder auch sonstige entsprechende Bauteile 7 sein bzw. aufweisen, welche mit zweiten Einschlüssen 70 ausgestattet sind, um mit korrespondieren ersten Anschlüssen 6 gekoppelt zu werden. Diese Bauteile 7 können beispielsweise Funkmodule aufweisen, um über diese angesteuert zu werden oder Daten zu übermitteln/empfangen. Eine Ansteuerung kann aber auch über eine entsprechende Verbindung via Verbindungselement 8 und Stromschiene 4 erfolgen. Bevorzugt wird die Verbindung zur Stromschiene 4, welche über die Kopplung von erstem Anschluss 6 und zweitem Anschluss 70 geschieht, zur Stromversorgung des Bauteils 7 genutzt. Bevorzugt kann dann, wie zuvor beschrieben, eine entsprechende Leiterplatte bereitgestellt sein, um die Stromwerte bzw. Spannungswerte der Stromschiene 4 auf diejenigen des entsprechenden Bauteils 7 anzupassen.

Das elektrische oder elektronische Bauteil 7 kann des Weiteren einen Koppelbereich 71 zur mechanischen Kopplung mit dem Tragprofil 2 und/oder der Stromschiene 4 und/oder dem Adapterelement 5 und bevorzugt dessen Adaptergehäuse 9 aufweisen. Dies ist beispielhaft in den Figuren 3 bis 6 dargestellt. Dort ist die hier dargestellte Spot-Leuchte 7 mit dem Adaptergehäuse 9 mechanisch gekoppelt. Die Tragschiene 1 und/oder das elektrische oder elektronische Bauteil 7 kann des Weiteren eine Verbindungsachse 72 aufweisen, um das elektrische oder elektronische Bauteil 7 mit dem Tragprofil 2 und/0der der Stromschiene 4 und/oder dem Adapterelement 5 und bevorzugt dessen Adaptergehäuse 9 mechanisch zu koppeln. Dabei ist bevorzugt eine mechanisch drehbare Kopplung mittels der Verbindungsachse 72 bevorzugt, um dem Bauteil 7 entsprechend weitere Freiheitsgrade zu verleihen. Der Koppelbereich 71 ist dabei bevorzugt mit der Verbindungsachse 72 verbindbar oder, wie dargestellt, mit dieser ausgebildet bzw. weist diese auf.

Das Adaptergehäuse 9 kann des Weiteren, wie insbesondere den Figuren 3 bis 6 zu entnehmen ist, eine Führungsschiene 93 aufweisen, welche mit dem elektrischen oder elektronischen Bauteil 7 mechanisch koppelbar ist, um das elektrische oder elektronische Bauteil 7 entlang der Führungsschiene 93 verschiebbar zu halten. Eine Kopplung kann hier mit der Führungsschiene 93 bevorzugt über den Koppelbereich 71 bzw. die Verbindungsachse 72 erfolgen. Wie in dem dargestellten Ausführungsbeispiel der Figuren 3 bis 6 zu entnehmen ist, kann diese Führungsschiene 93 sich hier entlang der U-Form bzw. C-Form des Adaptergehäuses 9 erstrecken. Selbstverständlich kann die Führungsschiene 93 in beliebiger Weise ausgestaltet sein, um die Freiheitsgrade des Bauteils 7 nach Belieben individuell zu gestalten. Im hier dargestellten Ausführungsbeispiel verläuft die Führungsschiene 93 überwiegend auf einer Seite des Adapterelements 5 bzw. des Adaptergehäuses 9 und somit hier auch bezüglich des Tragprofils 2. Um ein Verkippen der Tragschiene 1 beispielsweise bei einer Pendelaufhängung zu vermeiden, kann an dem Bauteil 7 ein entsprechendes Gegengewicht an der der Führungsschiene 93 gegenüberliegenden Seite des Adaptergehäuses 9 vorgesehen sein. Das Gegengewicht kann beispielsweise lösbar vorgesehen sein, um dieses entsprechend dem zu verwendenden Bauteil 7 auszuwählen. Auch ist es denkbar, dass die Führungsschiene 93 sich über die gesamte Länge des Adaptergehäuses 9 erstreckt, und dann das Gegengewicht ebenso mit der Führungsschiene 93, aber auf der dem Bauteil 7 gegenüberliegenden Seite, verbunden ist. Hier sind der Ausgestaltung der vorliegenden Erfindung keine Grenzen gesetzt.

Wie in den Figuren 1, 2, 5 und 6 angedeutet sowie in Figur 9 dargestellt, kann die Tragschiene 1 ferner eine elektrische oder elektronische Komponente 3 aufweisen, welche mit der oder einer anderen Stromschiene 4 und vorzugsweise deren elektrischen Leitern 40 elektrisch und bevorzugt beispielsweise mit dem Tragprofil 2 mechanisch koppelbar ist. Eine mechanische Kopplung kann, wie beispielsweise der Figur 9 zu entnehmen ist, mittels Rastmitteln 30 hier in Form einer Rastfeder bereitgestellt sein. Auch andere Verbindungsmittel sind hier selbstverständlich denkbar. Eine elektrische Kontaktierung mit (wenigstens einer) der Stromschiene(n) 4 kann über entsprechende elektrische Kontaktelemente 31, hier in Form eines sogenannten Drehknebels, bereitgestellt werden. Selbstverständlich sind auch andere Kontaktelemente 31 denkbar. Bei der elektrischen oder elektronischen Komponente 3 kann es sich bevorzugt um eine Leuchte, wie insbesondere eine Lichtbandleuchte oder eine Spot-Leuchte handeln. Die Figuren 1, 2, 5 und 6 zeigen hier beispielhaft eine Lichtbandleuchte als entsprechende Komponente 3. Auch ist es denkbar, dass die Komponente 3 ein Betriebsgerät und/oder einen Sensor, wie beispielhaft in Figur 9 angedeutet, aufweist. Als Sensoren kommen alle denkbaren Sensoren, wie beispielsweise Bewegungssensoren oder Helligkeitssensoren in Frage.

Die Tragschiene 1 kann des Weiteren ein Kabelführungselement 12 aufweisen. Dieses soll dazu dienen, etwaige außenliegende Kabel 13 der Tragschiene 1 sicher zu führen und zu halten. Hierzu weist das Kabelführungselement 12 bevorzugt wenigstens einen Aufnahmeabschnitt 120 zum seitlichen Einführen eines Kabels 13 quer zu Längserstreckung und zum Halten des Kabels 13 auf. Des Weiteren weist das Kabelführungselement 12 bevorzugt eine Verbindungsstruktur 121 zur mechanischen Verbindung des Kabelführungselements 2 mit einer korrespondieren Verbindungsstruktur des Tragprofils 2 auf. Bei der korrespondieren Verbindungsstruktur des Tragprofils 2 kann es sich, wie dargestellt, bevorzugt um die Haltestruktur 21 handeln. Insofern können bereits bestehende Strukturen zum Befestigen des Kabelführungselements 12 genutzt werden. Das Kabelführungselement 12 befindet sich dann auch an einer Position, an der eine Kabelführung besonders bevorzugt erwünscht ist, da diese rückseitig der Tragschiene 1 vorgesehen ist. Bevorzugt ist das Kabelführungselement 12 längs des Tragprofils 2 verschiebbar vorgesehen; dies bspw. aufgrund des sich längs erstreckenden Profils der Haltestruktur 21. Somit kann das Kabelführungselement 12 an einer beliebigen Position vorgesehen bzw. an diese verschoben werden.

Die Aufnahmeabschnitte 120 können, wie dargestellt, in unterschiedlicher Weise ausgebildet werden. Denkbar ist beispielsweise eine Federlasche 122, in die beispielsweise ein oder mehrere Kabel 13 entsprechend seitlich eingeschoben und somit gehalten werden können. Rastvorsprünge 125 an den Federlaschen 122 können ein versehentliches Herausrutschen der Kabel 13 verhindern. Auch sind Klemmlaschen 123 denkbar, in die ein Kabel 13 seitlich eingeführt und verrastet werden kann; diese können dazu aufeinander zu gerichtete Rastvorsprünge oder Hinterschnittbereiche 126 aufweisen. Ebenso ist es denkbar, Haltelaschen 124 vorzusehen, welche beispielsweise ein seitliches Einführen eines Kabels zwischen eben dieser Haltelasche 124 und hier beispielsweise einem Teil des Tragprofils 2 ermöglicht, um zwischen diesen Bauteilen letztlich ein Kabel 13 zu halten und zu führen. Auch diese können Rastvorsprünge 127 aufweisen, um ein Herausrutschen der so gehaltenen Kabel 13 zu verhindern. Der Ausgestaltung des Kabelführungselements 12 sind durch die vorliegende Erfindung somit keine Grenzen gesetzt. Das Kabelführungselement 12 ist bevorzugt aus Kunststoff und besonders bevorzugt in einem Spritzgussverfahren hergestellt.

Das Kabelführungselement 12 ist insbesondere deswegen von großem Vorteil, da meist in Tragschienen 1 das Platzangebot im Inneren sehr begrenzt ist. Etwaige zusätzliche Kabelstränge, welche von entsprechenden Komponenten 3 oder Bauteilen 7 ausgehen, sind auf der Rückseite der Tragschiene 1 vorgesehen, und so weitestgehend unsichtbar bzw. verdeckt durch die Tragschiene 1. Ein Vorteil kann sein, dass beispielsweise zusätzliche Datenleitungen auf der Rückseite verlegt weniger Störungen durch Magnetfelder erfahren, als sie im Inneren einer Stromschiene ausgesetzt wären.

Durch Vorsehen mehrerer Tragschienen, von denen wenigstens eine eine Tragschiene 1 gemäß der Erfindung ist, kann ein Tragschienensystem zum Anschluss elektrischer oder elektronischer Komponenten 3 gebildet werden. Dabei können die Tragschienen 1 bevorzugt zueinander längs in Reihe angeordnet werden. Die Stromschienen 4 benachbarter Tragschienen 1, vorzugsweise deren elektrische Leiter 40, können dann elektrisch miteinander gekoppelt sein. Das Tragschienensystem kann einen ersten Verbinder zum elektrischen und bevorzugt auch mechanischen Koppeln der Stromschienen 4 aufweisen. Auch kann das Tragschienensystem einen zweiten Verbinder zum mechanischen Koppeln der Tragprofile 2 bevorzugt durch korrespondierende Koppelstrukturbereiche des Tragprofils 2 aufweisen. Auch kann das Tragschienensystem bevorzugt ein Verbindungsteil, wie eine Verbindungsschiene aufweisen, welches wenigstens einen Teil des ersten Verbinders und/oder des zweiten Verbinders aufweist. Somit kann insgesamt eine besonders einfache Kopplung mehrerer Tragschienen 1 erfolgen. Beispielsweise kann der erste Verbinder auch mit der Stromschiene 4 integral ausgebildet sein. Denkbar ist hier beispielsweise eine Ausbildung in Form einer Stecker-Buchse-Verbindung. In vergleichbarer Weise kann auch der zweite Verbinder beispielsweise integral mit dem Tragprofil 2 ausgebildet sein.

Die vorliegende Erfindung ist durch die vorbeschriebenen Ausführungsbeispiele nicht beschränkt, sofern sie vom Gegenstand der folgenden Ansprüche umfasst ist. Insbesondere können die Merkmale der unterschiedlichen Ausführungsbeispiele in beliebiger Weise miteinander kombiniert und untereinander ausgetauscht werden.

## Patentansprüche

1. Leuchten-Tragschiene (1) für ein Tragschienensystem, aufweisend
ein längliches Tragprofil (2),
eine Stromschiene (4) mit wenigstens einem elektrischen Leiter (40) zum elektrischen Anschluss von elektrischen oder elektronischen Komponenten (3), wobei sich die Stromschiene (4) längs des Tragprofils (2) erstreckt, und
ein Adapterelement (5) mit einem ersten Anschluss (6) und einem Verbindungselement (8) sowie einem Adaptergehäuse (9) zum Tragen des ersten Anschlusses (6) und/oder des Verbindungselements (8),
wobei der erste Anschluss (6) über das Verbindungselement (8) elektrisch und/oder signaltechnisch mit der Stromschiene (4) koppelbar ist, und
wobei der erste Anschluss (6) zum Anschließen eines korrespondierenden zweiten Anschlusses (70) eines elektrischen oder elektronischen Bauteils (7) ausgebildet ist, um so das elektrische oder elektronische Bauteil (7) über das Verbindungselement (8) mit der Stromschiene (4) elektrisch und/oder signaltechnisch zu koppeln,
**dadurch gekennzeichnet, dass**
das Verbindungselement (8) über Kabel (11) mit dem ersten Anschluss (6) elektrisch und/oder signaltechnisch verbunden ist.

2. Leuchten-Tragschiene (1) gemäß Anspruch 1, wobei der erste Anschluss (6) einen Teil einer Standardschnittstelle, wie HDMI, USB, Hohlsteckerverbindung, Netzwerksteckerverbindung bspw. für LAN-Kabel für Power over Ethernet (PoE), bildet, vorzugsweise eine standardisierte Anschlussbuchse derselben.

3. Leuchten-Tragschiene (1) gemäß einem der vorhergehenden Ansprüche, wobei das Adapterelement (5) mehrere erste Anschlüsse (6) aufweist, welche gleich oder unterschiedlich ausgebildet sind, wobei bevorzugt jeweils einer, mehrere oder alle der mehreren ersten Anschlüsse (6) über eines oder mehrere Verbindungselemente (8) elektrisch und/oder signaltechnisch mit der Stromschiene (4) koppelbar ist.

4. Leuchten-Tragschiene (1) gemäß einem der vorhergehenden Ansprüche, wobei zwischen dem Verbindungselement (8) und dem oder den ersten Anschluss/Anschlüssen (6) eine Leiterplatte für eine Transformation der Spannungsund/oder Stromwerte der Stromschiene (4), und/oder für eine Transformation von dem ersten Anschluss (6), wie einem Ethernet-Eingang, zu einem dritten Anschluss, wie einem Ethernet-Ausgang, vorgesehen sein, wobei das Adapterelement (5) bevorzugt den dritten Anschluss aufweist.

5. Leuchten-Tragschiene (1) gemäß einem der vorhergehenden Ansprüche, wobei das Adaptergehäuse (9) den ersten Anschluss (6) und/oder den dritten Anschluss aufweist, vorzugsweise mit diesem oder diesen integral ausgebildet ist.

6. Leuchten-Tragschiene (1) gemäß einem der vorhergehenden Ansprüche, wobei das Verbindungselement (8) zur elektrischen und/oder signaltechnischen Kopplung bevorzugt lösbar mit der Stromschiene (4) verbindbar ist, und/oder
wobei das Verbindungselement (8) direkt an oder mit dem Adaptergehäuse (9) ausgebildet ist, und/oder wobei das Verbindungselement (8) lösbar mit dem Adaptergehäuse (9) verbunden ist, und/oder
wobei das Verbindungselement (8) mit dem ersten Anschluss (6) als eine Einheit (10) ausgebildet ist, wobei diese Einheit (10), bevorzugt über das Verbindungselement (8) und ferner bevorzugt lösbar, mit dem Adaptergehäuse (9) verbindbar ist.

7. Leuchten-Tragschiene (1) gemäß einem der vorhergehenden Ansprüche, wobei das Tragprofil (2) wenigstens eine Durchgangsöffnung (26) aufweist, wobei das Verbindungselement (8) zur elektrischen und/oder signaltechnischen Kopplung mit der Stromschiene (4) wenigstens teilweise durch die Durchgangsöffnung (26) geführt ist, und/oder
wobei das Tragprofil (2) einen Innenraum (20) zur wenigstens teilweisen Aufnahme von elektrischen oder elektronischen Komponenten (3) begrenzt, und/oder wobei das Tragprofil (2) eine Haltestruktur (21) zur mechanischen Befestigung der Leuchten-Tragschiene (1) aufweist, und/oder
wobei die Stromschiene (4) in oder an dem Tragprofil (2) aufgenommen ist, vorzugsweise in dem Innenraum (20) des Tragprofils (2), und/oder
wobei das Tragprofil (2) eine offene Längsseite (24) aufweist, über die die elektrischen oder elektronischen Komponenten (3) elektrisch mit der Stromschiene (4) und bevorzugt mechanisch mit dem Tragprofil (2) gekoppelt werden können.

8. Leuchten-Tragschiene (1) gemäß einem der vorhergehenden Ansprüche, ferner aufweisend ein elektrisches oder elektronisches Bauteil (7) mit einem zweiten Anschluss (70) zur Verbindung mit dem korrespondierenden ersten Anschluss (6) des Adapterelements (5) zur elektrischen und/oder signaltechnischen Kopplung mit der Stromschiene (4),
wobei das elektrische oder elektronische Bauteil (7) bevorzugt eine Leuchte, insbesondere eine Spot-Leuchte oder eine Schwanenhalsleuchte, ein Sensor, insbesondere ein Bewegungssensor oder ein Helligkeitssensor, eine Funkbake, ein WLAN-Repeater, ein Lautsprecher, eine Kamera, ein Ventilator, und/oder ein Feuermelder ist,
wobei vorzugsweise das elektrische oder elektronische Bauteil (7) einen Koppelbereich (71) zur mechanischen Kopplung mit dem Tragprofil (2) und/oder der Stromschiene (4) und/oder dem Adapterelement (5), ferner vorzugsweise dem Adaptergehäuse (9).

9. Leuchten-Tragschiene (1) gemäß dem Anspruch 8, ferner aufweisend eine Verbindungsachse (72), um das elektrische oder elektronische Bauteil (7) mit dem Tragprofil (2) und/oder der Stromschiene (4) und/oder dem Adapterelement (5), vorzugsweise dem Adaptergehäuse (9), mechanisch und bevorzugt drehbar zu koppeln, wobei der Koppelbereich (71) bevorzugt mit der Verbindungsachse (72) verbindbar ist oder diese aufweist.

10. Leuchten-Tragschiene (1) gemäß einem der vorhergehenden Ansprüche, wobei das Adapterelement (5), vorzugsweise das Adaptergehäuse (9), mit dem Tragprofil (2) und/oder der Stromschiene (4) mechanisch koppelbar ist,
wobei vorzugsweise das Adaptergehäuse (9) eine Koppelstruktur (90) aufweist, welche mit einer korrespondierenden Koppelstruktur des Tragprofils (2) und/oder der Stromschiene (4), vorzugsweise der Haltestruktur (21) des Tragprofils (2), mechanisch koppelbar und vorzugsweise in Längsrichtung (L) der Leuchten-Tragschiene (1) verschiebbar mechanisch koppelbar ist.

11. Leuchten-Tragschiene (1) gemäß einem der vorhergehenden Ansprüche, wobei das Adaptergehäuse (9) eine U-Form oder eine C-Form aufweist, um das Tragprofil (2) wenigstens teilweise zu umgreifen, vorzugsweise, wenn das Adapterelement (5) mit dem Tragprofil (2) mechanisch gekoppelt ist.

12. Leuchten-Tragschiene (1) gemäß einem der Ansprüche 8-11, wobei das Adaptergehäuse (9) eine Führungsschiene (93) aufweist, welche mit dem elektrischen oder elektronischen Bauteil (7), bevorzugt über den Koppelbereich (71) oder die Verbindungsachse (72), mechanisch koppelbar ist, um das elektrische oder elektronische Bauteil (7) entlang der Führungsschiene (93) verschiebbar zu halten.

13. Leuchten-Tragschiene (1) gemäß einem der vorhergehenden Ansprüche, ferner aufweisend wenigstens eine elektrische oder elektronische Komponente (3), welche mit der Stromschiene (4), vorzugsweise deren elektrischen Leitern (40), elektrisch und bevorzugt bspw. mit dem Tragprofil (2) mechanisch koppelbar ist,
wobei die elektrische oder elektronische Komponente (3) bevorzugt eine Leuchte, insbesondere eine Lichtbandleuchte oder eine Spot-Leuchte, ein Betriebsgerät und/oder einen Sensor, insbesondere einen Bewegungssensor oder einen Helligkeitssensor, ist.

14. Leuchten-Tragschiene (1) gemäß einem der vorhergehenden Ansprüche, ferner aufweisend ein Kabelführungselement (12), welches wenigstens einen Aufnahmeabschnitt (120) zum seitlichen Einführen eines Kabels (13) quer zu dessen Längserstreckung und Halten des Kabels (13) aufweist, sowie eine Verbindungsstruktur (121) zur mechanischen Verbindung des Kabelführungselements (12) mit einer korrespondierenden Verbindungsstruktur, vorzugsweise der Haltestruktur (21), des Tragprofils (2).

15. Tragschienensystem zum Anschluss elektrischer oder elektronischer Komponenten (3), aufweisend mehrere Tragschienen, wobei wenigstens eine der Tragschienen eine Leuchten-Tragschiene (1) gemäß einem der Ansprüche 1-14 ist, wobei die Leuchten-Tragschienen (1) bevorzugt zueinander längs in Reihe angeordnet sind, wobei die Stromschienen (4) benachbarter Leuchten-Tragschienen (1), vorzugsweise deren elektrische Leiter (40), elektrisch miteinander gekoppelt sind,
wobei vorzugsweise das Tragschienensystem ferner aufweist: einen ersten Verbinder zum elektrischen und bevorzugt auch mechanischen Koppeln der Stromschienen (4), und/oder einen zweiten Verbinder zum mechanischen Koppeln der Tragprofile (2), bevorzugt durch korrespondierende Koppelstrukturbereiche,
wobei das Tragschienensystem weiter bevorzugt ein Verbindungsteil, wie eine Verbindungsschiene, aufweist, welches wenigstens einen Teil des ersten Verbinders und/oder des zweiten Verbinders aufweist.

## Claims

1. A **carrier rail** (1) for a carrier rail system, comprising: an elongate **carrier profile** (2); a **busbar** (4) having at least one electrical conductor (40) for electrically connecting electrical or electronic components (3), wherein the busbar (4) extends along the carrier profile (2); and an **adapter element** (5) with a first connection (6) and a connecting element (8), as well as an adapter housing (9) for holding the first connection (6) and/or the connecting element (8); wherein the first connection (6) is electrically and/or signal-wise coupleable to the busbar (4) via the connecting element (8); and wherein the first connection (6) is configured to connect a corresponding second connection (70) of an electrical or electronic component (7) such that the electrical or electronic component (7) can be electrically and/or signal-wise coupled to the busbar (4) via the connecting element (8); **characterized in that** the connecting element (8) is electrically and/or by means of signals connected to the first connection (6) via a cable (11).

2. The carrier rail (1) according to Claim 1, wherein the first connection (6) forms part of a standard interface, such as HDMI, USB, barrel connector, or network connector (for example for LAN cables for Power over Ethernet (PoE)), and is preferably a standardized connector socket of that interface.

3. The carrier rail (1) according to one of the preceding claims, wherein the adapter element (5) has multiple first connections (6) which are the same or different in design, and wherein preferably each one, several, or all of the multiple first connections (6) are electrically and/or for signal transmission coupleable to the busbar (4) via one or more connecting elements (8).

4. The carrier rail (1) according to one of the preceding claims, wherein a circuit board is provided between the connecting element (8) and the one or more first connections (6) for transforming the voltage and/or current values of the busbar (4) to those of the first connection(s) (6), and/or for transforming from the first connection (6) (such as an Ethernet input) to a third connection (such as an Ethernet output), the adapter element (5) preferably having said third connection.

5. The carrier rail (1) according to one of the preceding claims, wherein the adapter housing (9) has the first connection (6) and/or the third connection, and is preferably formed integrally with it.

6. The carrier rail (1) according to one of the preceding claims, wherein the connecting element (8) is **preferably detachably** connectable to the busbar (4) for electrical and/or signal coupling, **and/or** wherein the connecting element (8) is formed directly on or with the adapter housing (9), **and/or** wherein the connecting element (8) is detachably connected to the adapter housing (9), **and/or** wherein the connecting element (8) and the first connection (6) are formed as a unit (10), which unit (10) is connectable to the adapter housing (9), preferably via the connecting element (8) and further preferably in a detachable manner.

7. The carrier rail (1) according to one of the preceding claims, wherein the carrier profile (2) has at least one through-opening (26), the connecting element (8) being guided at least partially through the through-opening (26) for electrical and/or signal coupling with the busbar (4), **and/or** wherein the carrier profile (2) defines an interior (20) for at least partially accommodating electrical or electronic components (3), **and/or** wherein the carrier profile (2) has a support structure (21) for mechanical mounting of the carrier rail (1), **and/or** wherein the busbar (4) is received in or on the carrier profile (2), preferably in the interior (20) of the carrier profile (2), **and/or** wherein the carrier profile (2) has an open longitudinal side (24) via which the electrical or electronic components (3) can be electrically coupled to the busbar (4) and preferably mechanically coupled to the carrier profile (2).

8. The carrier rail (1) according to one of the preceding claims, further comprising an electrical or electronic component (7) having a second connection (70) for connecting to the corresponding first connection (6) of the adapter element (5) for electrical and/or signal coupling with the busbar (4), wherein the electrical or electronic component (7) is preferably a luminaire - in particular a spotlight or a gooseneck luminaire - a sensor - in particular a motion sensor or a brightness sensor - a beacon, a WLAN repeater, a loudspeaker, a camera, a fan, **and/or** a fire detector.

9. The carrier rail (1) according to Claim 8, further comprising a connecting axis (72) for mechanically coupling the electrical or electronic component (7) with the carrier profile (2) and/or the busbar (4) and/or the adapter element (5) (preferably the adapter housing (9)), and preferably in a rotatable manner, wherein the coupling region (71) is preferably connectable to the connecting axis (72) or comprises the connecting axis (72).

10. The carrier rail (1) according to one of the preceding claims, wherein the adapter element (5), preferably the adapter housing (9), is mechanically coupleable to the carrier profile (2) and/or the busbar (4), wherein preferably the adapter housing (9) has a coupling structure (90) which is mechanically coupleable with a corresponding coupling structure of the carrier profile (2) and/or the busbar (4) (preferably a coupling structure of the support structure (21) of the carrier profile (2)), and is preferably mechanically coupleable in a slidable manner in the longitudinal direction (L) of the carrier rail (1).

11. The carrier rail (1) according to any of Claims 8-10, wherein the adapter housing (9) has a U-shape or a C-shape so as to at least partially encompass the carrier profile (2), preferably when the adapter element (5) is mechanically coupled to the carrier profile (2).

12. The carrier rail (1) according to any of Claims 8-11, wherein the adapter housing (9) has a guide rail (93) which is mechanically coupleable with the electrical or electronic component (7), preferably via the coupling region (71) or the connecting axis (72), so as to hold the electrical or electronic component (7) in a slidable manner along the guide rail (93).

13. The carrier rail (1) according to one of the preceding claims, further comprising at least one electrical or electronic component (3) which is electrically coupled to the busbar (4) (preferably to the electrical conductors (40) thereof) and is preferably mechanically coupled to, for example, the carrier profile (2), wherein the electrical or electronic component (3) is preferably a luminaire - in particular a continuous-line luminaire or a spotlight - a control gear unit, **and/or** a sensor (in particular a motion sensor or a brightness sensor).

14. The carrier rail (1) according to one of the preceding claims, further comprising a **cable guiding element** (12) which has at least one receiving section (120) for the lateral insertion of a cable (13) transverse to its longitudinal direction and for holding the cable (13), as well as a connecting structure (121) for mechanically connecting the cable guiding element (12) to a corresponding connecting structure - preferably the support structure (21) - of the carrier profile (2).

15. A **carrier rail system** for connecting electrical or electronic components (3), comprising a plurality of carrier rails, wherein at least one of the carrier rails is a carrier rail (1) according to any one of Claims 1-14, wherein the carrier rails (1) are preferably arranged longitudinally in series, and the busbars (4) of adjacent carrier rails (1) - preferably their electrical conductors (40) - are electrically coupled to each other, and wherein the carrier rail system further preferably comprises: a first connector for electrically and preferably also mechanically coupling the busbars (4), **and/or** a second connector for mechanically coupling the carrier profiles (2), preferably via corresponding coupling structure sections, and wherein the carrier rail system further preferably comprises a connecting part, such as a connecting rail, which has at least a portion of the first connector and/or of the second connector.

## Revendications

1. **Rail porteur** (1) pour un système de rails porteurs, comportant un **profilé porteur** allongé (2); un **rail de courant** (4) comportant au moins un conducteur électrique (40) pour la connexion électrique de composants électriques ou électroniques (3), le rail de courant (4) s'étendant le long du profilé porteur (2); et un **élément adaptateur** (5) doté d'une première connexion (6) et d'un élément de liaison (8), ainsi que d'un boîtier d'adaptateur (9) servant à porter la première connexion (6) et/ou l'élément de liaison (8); la première connexion (6) pouvant être couplée électriquement et/ou au niveau des signaux au rail de courant (4) par l'intermédiaire de l'élément de liaison (8); et la première connexion (6) étant configurée pour connecter une seconde connexion correspondante (70) d'un composant électrique ou électronique (7) de sorte que le composant électrique ou électronique (7) puisse être couplé électriquement et/ou au niveau des signaux au rail de courant (4) par l'intermédiaire de l'élément de liaison (8); **caractérisé en ce que** l'élément de liaison (8) est relié électriquement et/ou pour la transmission de signaux à la première connexion (6) par un câble (11).

2. Rail porteur (1) selon la Revendication 1, dans lequel la première connexion (6) constitue une partie d'une interface normalisée, telle que HDMI, USB, connecteur coaxial (Hohlstecker) ou connecteur réseau (par exemple pour câble LAN pour alimentation PoE - Power over Ethernet), et est de préférence une prise standardisée de cette interface.

3. Rail porteur (1) selon l'une quelconque des revendications précédentes, dans lequel l'élément adaptateur (5) comporte plusieurs premières connexions (6) identiques ou différentes, et dans lequel de préférence chacune, plusieurs ou l'ensemble des multiples premières connexions (6) peuvent être couplées électriquement et/ou pour la transmission de signaux au rail de courant (4) par l'intermédiaire d'un ou de plusieurs éléments de liaison (8).

4. Rail porteur (1) selon l'une quelconque des revendications précédentes, dans lequel un circuit imprimé est prévu entre l'élément de liaison (8) et la ou les premières connexions (6) pour adapter les valeurs de tension et/ou de courant du rail de courant (4) à celles de la ou des premières connexions (6), et/ou pour convertir un signal provenant de la première connexion (6) (par exemple une entrée Ethernet) en un troisième raccord (par exemple une sortie Ethernet), l'élément adaptateur (5) comportant de préférence ce troisième raccord.

5. Rail porteur (1) selon l'une quelconque des revendications précédentes, dans lequel le boîtier d'adaptateur (9) comporte la première connexion (6) et/ou le troisième raccord, et est de préférence réalisé d'une seule pièce avec celui-ci.

6. Rail porteur (1) selon l'une quelconque des revendications précédentes, dans lequel l'élément de liaison (8) est **de préférence raccordable de manière amovible** au rail de courant (4) pour le couplage électrique et/ou de signaux, **et/ou** dans lequel l'élément de liaison (8) est formé directement sur ou avec le boîtier d'adaptateur (9), **et/ou** dans lequel l'élément de liaison (8) est relié de manière amovible au boîtier d'adaptateur (9), **et/ou** dans lequel l'élément de liaison (8) et la première connexion (6) forment une unité (10), laquelle unité (10) est raccordable au boîtier d'adaptateur (9), de préférence par l'intermédiaire de l'élément de liaison (8) et, en outre, de préférence de manière amovible.

7. Rail porteur (1) selon l'une quelconque des revendications précédentes, dans lequel le profilé porteur (2) comporte au moins une ouverture de passage (26), l'élément de liaison (8) étant guidé au moins partiellement à travers l'ouverture de passage (26) pour être couplé électriquement et/ou en termes de signaux avec le rail de courant (4), **et/ou** dans lequel le profilé porteur (2) délimite un espace intérieur (20) pour le logement au moins partiel de composants électriques ou électroniques (3), **et/ou** dans lequel le profilé porteur (2) comporte une structure de support (21) pour la fixation mécanique du rail porteur (1), **et/ou** dans lequel le rail de courant (4) est disposé dans ou sur le profilé porteur (2), de préférence à l'intérieur (20) du profilé porteur (2), **et/ou** dans lequel le profilé porteur (2) présente un côté longitudinal ouvert (24) par lequel les composants électriques ou électroniques (3) peuvent être couplés électriquement au rail de courant (4) et de préférence mécaniquement au profilé porteur (2).

8. Rail porteur (1) selon l'une quelconque des revendications précédentes, comprenant en outre un composant électrique ou électronique (7) doté d'une seconde connexion (70) pour sa connexion à la première connexion correspondante (6) de l'élément adaptateur (5) en vue d'un couplage électrique et/ou de signaux avec le rail de courant (4), le composant électrique ou électronique (7) étant de préférence un luminaire - en particulier un projecteur ou un luminaire à col de cygne - un capteur - en particulier un détecteur de mouvement ou un capteur de luminosité - une balise, un répéteur WLAN, un haut-parleur, une caméra, un ventilateur, **et/ou** un détecteur d'incendie.

9. Rail porteur (1) selon la revendication 8, comprenant en outre un axe de liaison (72) pour coupler mécaniquement le composant électrique ou électronique (7) avec le profilé porteur (2) et/ou le rail de courant (4) et/ou l'élément adaptateur (5) (de préférence le boîtier d'adaptateur (9)), et de préférence de manière rotative, le domaine de couplage (71) étant de préférence raccordable à l'axe de liaison (72) ou comportant l'axe de liaison (72).

10. Rail porteur (1) selon l'une quelconque des revendications précédentes, dans lequel l'élément adaptateur (5), de préférence le boîtier d'adaptateur (9), est mécaniquement couplable au profilé porteur (2) et/ou au rail de courant (4), le boîtier d'adaptateur (9) comportant de préférence une structure de couplage (90) pouvant se coupler mécaniquement à une structure de couplage correspondante du profilé porteur (2) et/ou du rail de courant (4) (de préférence une structure de couplage de la structure de support (21) du profilé porteur (2)), et étant de préférence couplable mécaniquement de manière coulissante dans le sens longitudinal (L) du rail porteur (1).

11. Rail porteur (1) selon l'une quelconque des revendications 8 à 10, dans lequel le boîtier d'adaptateur (9) présente une forme en U ou en C de manière à embrasser au moins partiellement le profilé porteur (2), de préférence lorsque l'élément adaptateur (5) est mécaniquement couplé au profilé porteur (2).

12. Rail porteur (1) selon l'une quelconque des revendications 8 à 11, dans lequel le boîtier d'adaptateur (9) comporte un rail de guidage (93) qui peut être couplé mécaniquement avec le composant électrique ou électronique (7), de préférence par l'intermédiaire du domaine de couplage (71) ou de l'axe de liaison (72), afin de maintenir le composant électrique ou électronique (7) de manière coulissante le long du rail de guidage (93).

13. Rail porteur (1) selon l'une quelconque des revendications précédentes, comprenant en outre au moins un composant électrique ou électronique (3) qui est couplé électriquement au rail de courant (4) (de préférence à ses conducteurs électriques (40)) et de préférence couplé mécaniquement, par exemple, au profilé porteur (2), le composant électrique ou électronique (3) étant de préférence un luminaire - en particulier un luminaire linéaire ou un projecteur - un appareil de commande, **et/ou** un capteur - en particulier un détecteur de mouvement ou un capteur de luminosité.

14. Rail porteur (1) selon l'une quelconque des revendications précédentes, comprenant en outre un **élément de guidage de câble** (12) qui comporte au moins une section de réception (120) pour l'insertion latérale d'un câble (13) perpendiculairement à sa direction longitudinale et pour maintenir le câble (13), ainsi qu'une structure de liaison (121) pour la connexion mécanique de l'élément de guidage de câble (12) à une structure de liaison correspondante - de préférence la structure de support (21) - du profilé porteur (2).

15. **Système de rails porteurs** pour la connexion de composants électriques ou électroniques (3), comportant plusieurs rails porteurs, dont au moins un est un rail porteur (1) selon l'une quelconque des revendications 1 à 14, les rails porteurs (1) étant de préférence disposés bout à bout dans le sens de leur longueur, et les rails de courant (4) de rails porteurs (1) adjacents - de préférence leurs conducteurs électriques (40) - étant couplés électriquement entre eux, le système de rails porteurs comprenant de préférence en outre : un premier connecteur pour coupler électriquement et de préférence aussi mécaniquement les rails de courant (4), **et/ou** un second connecteur pour coupler mécaniquement les profilés porteurs (2), de préférence par des zones de structure de couplage correspondantes, le système de rails porteurs comprenant en outre de préférence une pièce de liaison, telle qu'un rail de liaison, qui comporte au moins une partie du premier connecteur et/ou du second connecteur.
